# EUROPEAN PATENT APPLICATION

(11) **EP 3 098 788 A1**
(43) Date of publication of application: **30.11.2016**
(21) Application number: 16171724.4
(22) Date of filing: 27.05.2016
(51) Int. Cl.: G07F 17/32

(54) **GAME SYSTEM, GAME TICKET AND METHOD FOR IMPLEMENTING A GAME**

(30) Priority: 27.05.2015 US 201514722968; 27.05.2015 CA 2893147
(71) Applicant: Internationale des Jeux, 92100 Boulogne-Billancourt Cedex (FR)
(72) Inventor: MAUPAS-OUDINOT, Jean-Baptiste, 75017 Paris (FR); HAUTECOEUR, Charlotte, 92380 Garches (FR); GUYOT, Olivier, 92140 Malakoff (FR); THEYS, Rémi, 13540 Puyricard (FR); VAUCHER, Stéphane, 94170 Le Perreux sur Marne (FR)
(74) Representative: Lavoix

(57) **Abstract**

The game system comprising a game ticket to be purchased by a player, the game ticket being assigned a winning first game result of a first game, the game ticket enabling the player to play to at least one second game as a function of the first game result, the first game result affecting the final prize expectancy to the second game.

## Description

### FIELD OF THE INVENTION

The present invention relates to the field of games.

### BACKGROUND OF THE INVENTION

It is possible to implement a game with providing a game ticket to be purchased by a player, the game ticket allowing the player to make a selection of game fields, performing a draw determining at least one winning selections, determining a prize table listing the winning selection(s) and the prize associated to each winning selection, and to determine the prize awarded to the game ticket as a function of the player's selection and of the prize table.

### SUMMARY OF THE INVENTION

One of the objects of the invention is to provide a game system that allows implementing a game that improves the game experience for the player.

According to one aspect of the invention, a game system comprises a game ticket to be purchased by a player, the game ticket being assigned a winning first game result of a first game, the game ticket enabling the player to play to at least one second game as a function of the first game result, the first game result affecting the final prize expectancy to the second game.

In an embodiment, the first game result comprises a prize data for the second game, a bonus data for the second game and/or a credit data for the second game.

In an embodiment, the first game result varies from one game ticket to another ticket in a game ticket pool of the game system.

In an embodiment, the first game result is printed on the game ticket and covered by a mask to be scratched-off by the player after purchase of the game support.

In an embodiment, the game ticket is printed with second game fields to be selected by the player.

In an embodiment, a second game is based on several successive instant draws, each following draw being operated as a function of the preceding draw and as a function of an input of the player after the preceding draw, the result of the following draw being a function of the preceding draw and/or of the input of the player.

In an embodiment, the game system comprises a computer system configured for implementing the second game.

In an embodiment, the computer system is configured for activating the game ticket upon receipt of an activation request, the computer system being configured for allowing the player to play the second game only after activation of the game ticket.

In an embodiment, the computer system comprises a ticket database storing ticket data for each game ticket, the ticket data comprising a game ticket identification code, a first game result assigned to the game ticket and a status of the game ticket.

In an embodiment, the computer system comprises a management module configured for checking a status of the game ticket, for allowing the player to play the second game as a function of the status of the game ticket and for updating the status of the game ticket.

In an embodiment, the management module is configured for opening a game session associated to a game ticket, for enabling the player to play once a second game and for closing the ticket session once the credit account is empty.

In an embodiment, the management module is configured for opening a ticket session associated to a game ticket, for crediting a ticket session credit account with credits of the first game result, for decrementing the credit account each time the player plays the second game and for closing the ticket session once the credit account is empty.

In an embodiment, the computer system comprises a game module configured for digitally executing the second game as a function of the first game result and an access module configured for the player to interact with the game module, the management module being configured for sending the status of the game ticket to the access module and the access module being configured for allowing the player to play the second game as a function of the ticket status.

In an embodiment, the first game result comprises a number of credits for playing the second game, the management module being configured for sending the credit account to the access module, the access module being configured for allowing the player to play the second game as a function of the credit account.

In an embodiment, the first game result comprises a context data needed for executing the second game, the management module being configured for sending the context data to the access module, the access module being configured for sending the context data to game module, the game module being configured for executing the second game as a function of the context data.

According to another aspect of the invention, a game ticket is allocated with a winning first game result of a first instant game, the game ticket allowing the player to participate to at least one second game to be implemented using the first game result, the first game result affecting the final prize expectancy of the second game.

According to another aspect of the invention, a method of implementing a game comprises the steps of:
- providing a game ticket which is assigned a winning first game result of a first game, the game ticket allowing the player to subsequently participate to at least one second game;
- implementing the second game as a function of the first game result, the first game result affecting the final prize expectancy of the second game.

In an embodiment, the method comprises revealing the final prize individually for each game ticket to one player at a time or as a community game simultaneously for several players at the same time.

### BRIEF DESCRIPTION OF THE DRAWINGS

The invention and its advantages will be better understood on reading the following description given solely by way of example and made with references to the appended drawings.
Figures 1 and 2 diagrammatically illustrate a game system comprising a game ticket, respectively before and after selection of game fields by a player.
Figure 3 diagrammatically illustrates a computer system of the game system, to be used with the game ticket of Figures 1 and 2.
Figure 4 and 5 diagrammatically illustrate another game ticket.
Figure 6 diagrammatically illustrates a computer system to be used with the game ticket of Figures 4 and 5.

### DETAILED DESCRIPTION OF THE INVENTION

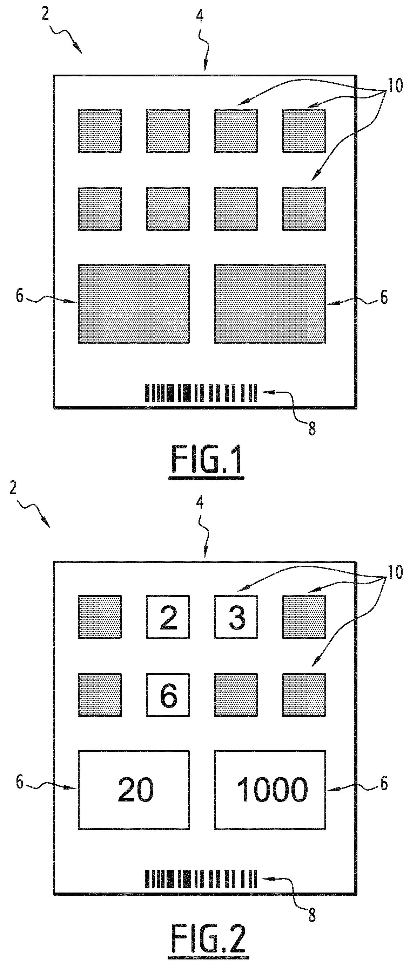

As illustrated on Figures 1 - 3, a game system 2 comprises a game ticket 4 for implementing a game based on a first instant game with a systematically winning first game result (or first game winning) and a second game implemented as a function of the first game result, the first game result affecting the final prize expectancy of the second game.

The game ticket 4 is assigned a first game result.

The game ticket 4 is a physical ticket.

The first game result is printed on the game ticket with being covered by a scratch-off film (Figure 1) to be scratched-off by the player (Figure 2) after purchase of the game ticket for revealing the first game result.

The first game result may be one single first game result data or a combination of several first game result data. The game ticket here comprises two first game fields 6 each printed with a respective first game result data, the combination of which defines the first game result.

A game system comprises in practice a pool of several game tickets allocated with respective first game results varying from one game ticket to the other. Upon drawing a particular game ticket in the pool, the player draws the corresponding first game result. The first game result thus depends on the choice of the player.

The game ticket 4 of Figures 1 and 2 is printed with a unique identification data 10 univocally identifying the game ticket. The identification data is for example a serial number encoded in a bar code, encoded in a matrix code or a QR code or printed in alpha numeric characters.

The second game is preferably a game allowing the player to make choices or selections impacting the result of the second game and requiring the player to make inputs or action indicative of said choices or selections.

The game ticket 4 of Figure 1 and 2 is configured for the player to enter inputs for the second game.

More specifically, the second game is here a draw game and the game ticket 4 is configured for allowing the player to make a selection for a draw.

The game ticket comprises a plurality of second game fields among which the player has to select only a portion of the second game fields, some game fields remaining unselected.

As illustrated on Figures 1 and 2, each game field is here covered with a scratch-off film (Figure 1) to be removed by the player for selecting said second game field 10 (Figure 2). Alternatively, the second game fields 10 are uncovered by scratch-off films and are selected by the player by entering a mark in the game field, e.g. by ticking the game field 10.

In one embodiment, each game ticket 4 is preassigned a respective prize table listing one or several winning selections of second game fields and the prize corresponding to each winning selection before retailing the game tickets 4. If the selection of the player matches a winning selection, the player is awarded the corresponding prize. The winning selection(s) vary from one ticket to the other in the pool.

In another embodiment, the game ticket 4 with the player's selection has to be registered for a draw that determines the prize table. The draw may be operated individually for each game ticket 4 or collectively for a plurality of game tickets registered for a same draw. The draw is performed before or after closure of registration for the draw and is in any case unrevealed to the player(s) before the closure of registration for the draw with remaining being unknown from the player(s) until closure of registration for the draw.

The second game is operated as a function of the first game result which impacts the final prize expectancy of the player at the second game.

The first game result may comprise context data needed for implementing the second game according to the rules of the second game or credit data determining which second game and/or how many second game the player can play.

The first game result may comprise prize data, a bonus for the second game and/or a number of credits for one or several second games. Prize data affects the calculation of the final prize to the second game. Prize data is e.g. a maximum winning for the second game.

A maximum winning and a bonus for the second game are context data, whereas a number of credits for one or several second games is a credit data.

If a first game instant result comprises a prize data, in particular a maximum winning, the final prize of the player at the second game is calculated as a function of the prize data, in particular the maximum winning. Two game tickets with identical player's selections of may ultimately be awarded different prizes as a function of the maximum winning of the respective first game results of the game tickets. For example, in a probability game or a draw game in which the player has a selection winning 30% of the maximum prize, the player wins 30 if the maximum winning of his game ticket is 100 but only 15 if the maximum winning of his game ticket is 50. The final prize expectancy of the player for the second game thus varies as a function of the first game result.

If a first game result comprises a number of credits for participating to a second game provided as a draw game, the player is for example allowed to register his selection for as much draws as the credits he was awarded. The final prize expectancy of the player is thus increased because the player increases his chances of winning.

In a draw game, a bonus may be the opportunity to select one additional game field (e.g. four game fields instead or three game fields in the example of Figures 1 and 2). The final prize expectancy of the player is thus increased because is chance of having a winning selection are increased.

The first game result may comprise different type of prizes. The first game result may set a maximum prize or an amount of credit(s). For a same second game, a game ticket may win money for a same second game winning rank whereas another game ticket may win credit(s) for the same second game winning rank.

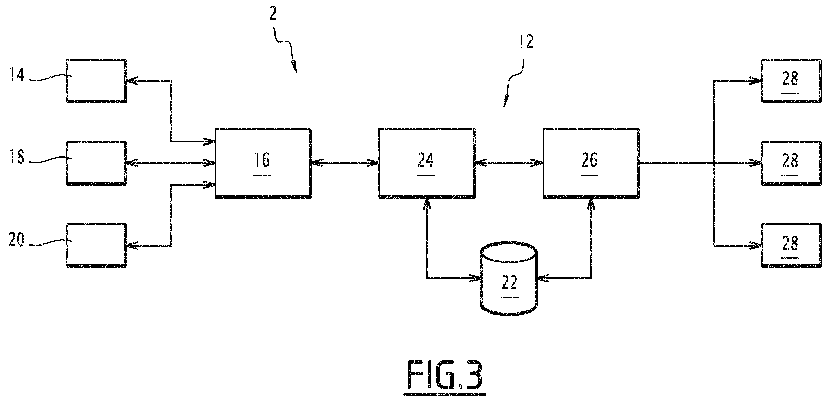

As illustrated on Figure 3, the game system 2 comprises a computer system 12 for implementing the game using the game ticket 4 of Figures 1 and 2.

The computer system 12 comprises a digital image capturing device 14 (e.g. an optical scanner or a camera) for capturing a digital image of the game ticket.

The computer system 12 comprises a reading module 16 configured for reading the game ticket by processing the image captured by the image capturing device 14.

The reading module 16 is configured for reading the identification data.

The reading module 16 is configured for reading the player's selection. The reading module 16 is here configured for identifying the game ticket 4 to refer to its specific game rules and detecting the game fields with removed scratch-off film. A game filed with removed scratch-off film is detected for example because second game data printed in this game field under the scratch-off film now appears on the image captured by the optical reader device. Alternatively, the reading module 16 is configured for detecting game fields with a mark entered therein.

Optionally, the reading module 16 is configured for reading the first game result printed on the game ticket 4, here by reading the first game result data in each first game field. The reading module 16 is for example configured for reading the first game result data after removal of the complete scratch-off film of the first game fields or without removal of the scratch-off film, e.g. using UV light or IR light to read through the scratch-off film.

The computer system 12 optionally comprises a man-machine interface device 18 the player to interact with the reading module 16.

The reading module 16 is optionally configured to request the player to confirm, correct and/or complete the data read via the interface device 18. To this end, the reading module 16 is configured to display games fields to the player and to request the player to make inputs to make, confirm, complete and/or correct his selection via the interface device 18.

Making the selection is needed e.g. if the player has selected no second game field. A correction or a completion is needed e.g. if the player has omitted to select a game field, if the player has selected a game field in excess and/or if the reading module 16 is unable to automatically determine the selected game fields, e.g. because the game ticket 4 was altered.

The reading module 16 is configured to emit a request for registration of the game ticket comprising the selection of the player and the draw selected by the player, e.g. the next draw in case of successive draws.

The computer system 12 optionally comprises a printer 20 for printing a receipt associated to the game ticket 4, the receipt having the first game result, the player's selection and/or the final prize and/or the designation of the draw. The printed is connected to the reading module 16 for receiving data from the reading module 16.

The reading module 16, the interface device 18 and/or the printer 20 may be incorporated in a same electronic device such as a retailer's terminal or a player's personal computer or a player's telecommunication user terminal such as a smartphone.

The game system 4 comprises a game ticket database 22 storing game ticket data associated to each game ticket 4, the game ticket data including the identification data, the first game result assigned to the game ticket 4 and a status of the game ticket 4. The status of the game ticket 4 namely indicates whether the game ticket 4 has already been played or not.

The game system 2 comprises a validation module 24 configured for receiving the request for registration of a game ticket 4 from the reading module 16 resulting from reading of a game ticket 4 and for checking the status of the status of the game ticket 4.

The validation module 24 is configured for updating the status of the game ticket 4 to register that the game ticket 4 has now been played and emitting a validation signal.

The game system comprises a game module 26 for receiving the validation signal and for determining the prize of the player as a function of the first game result of the game ticket 4 and of the selection of the player.

If the winning selections of the game ticket 4 are predetermined, the prize table of the game ticket 4 is registered in the ticket database 22 and the game module 26 is configured for calculating the prize of the game ticket 4 as a function of the first game result of the game ticket 4 and of the selection of the player.

If the player has to register his ticket for a designated draw, the winning selections being a function of the draw that the player registers for, the game module 26 is configured to determine the prize of the game ticket 4 as a function of the first game result, the player's selection, the result of the draw and a prize table of the draw. In one embodiment, the game module 26 is further configured for digitally performing the draw.

In a community draw game, the game module 26 is configured to broadcast the draw result to one or several display terminals 28 accessible to the players. Each display terminal 28 may be a personal telecommunication user terminal of the player, e.g. a smartphone, a player personal electronic device, e.g. a digital pad or a player personal computer, or a display screen, e.g. a display screen in a point of sale or a free access terminal in the point of sale.

Upon operation, the player purchases a game ticket 4, removes the scratch-off films of the first game fields to reveal the first game result and makes a selection of second game fields printed on the game ticket 4. The reading module 16 reads the ticket from a digital image captured by the image capturing device for reading the identification data and the selection of the player. The reading module 16 prints a receipt via the printer 20 and/or generates a digital receipt accessible by the player via a player's online account.

The game module 26 receives the reading data and retrieves the first game result from the game ticket 4 database using the identification code and/or from the reading data. If needed, the game module 26 performs a draw. The game module 26 then determines the second game result and the prize awarded to the game ticket 4.

The game module 26 determines the prize of the game ticket 4 based on the first game result and the second game result. The game module 26 broadcasts the draw result to the terminals. The prize is redeemed to the player, e.g. at a point of sale, or credited to a player's account.

When configured for allowing the player to make inputs to make his selection, the reading module 16 allows the second game to be implemented digitally, without using the game ticket 4 to make inputs.

In an alternative embodiment, the game system is configured for the second game to be operated digitally without using the game ticket 4 to make inputs. In one embodiment, the game ticket 4 is deprived of second game fields and the reading module 16 is configured to display games fields to the player and to request the player to make his selection via the interface device 18.

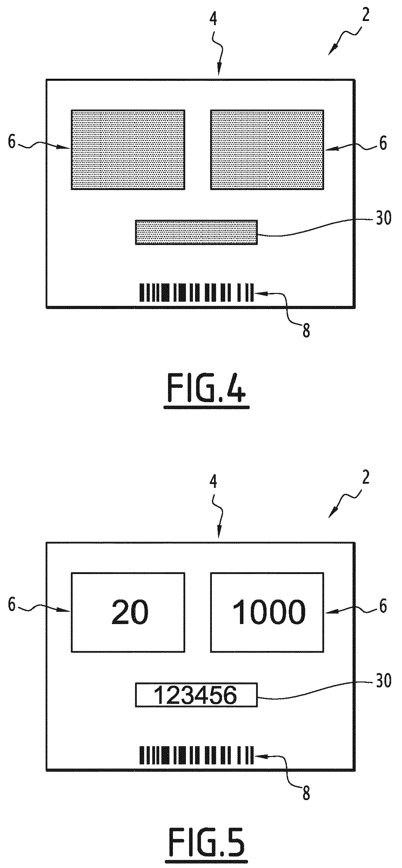

Figure 4 and 5 illustrate a game system 2 comprising a game ticket 4 for implementing the second game digitally without using the game ticket 4 to make inputs and with allowing to player to access the computer system 12 to play to the second game, the second game being operated as a function of the first game result.

The game ticket 4 differs from the game ticket of Figures 1 and 2 in that the game ticket 4 is printed with first game result and identification data but is deprived of second game data.

The first game result is covered with scratch-off film (Figure 4), to be removed by the player to reveal the first game result (Figure 5).

The game ticket 4 is further provided with access data 30 allowing the player to access the computer system 12 of the game system for playing the second game. The access data 30 is here printed on the game ticket 4. The access data 30 is an alphanumeric code. Alternatively, the access data 30 is stored in a computer memory embedded in the game ticket 4.

The access data 30 is optionally covered with a scratch-off film (Figure 4) to be removed by the player for revealing the access data 30 (Figure 5).

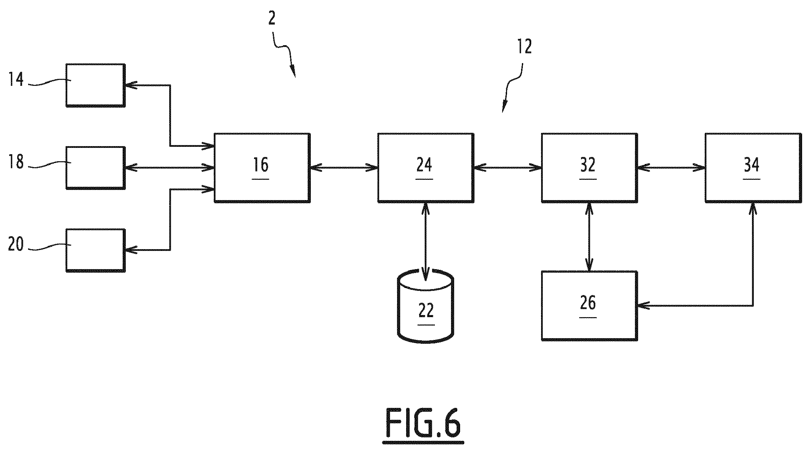

Figure 6 illustrates a computer system 12 for digitally implementing the second game and for determining the prize of the ticket

The computer system 12 of Figure 6 comprises a reading module 16, a validation module 24, a ticket database 22, a management module 32, an access module 34 and a game module 26.

The ticket database 22 stores game ticket data associated to each game ticket 4, the game ticket data including the identification data, the access data 30, the first game result assigned to the game ticket 4 and a status of the game ticket 4.

The reading module 16 is configured for reading the game ticket 4. In a specific embodiment, the reading module 16 is configured for receiving a digital image of the game ticket 4 captured by the image capturing device 14 and for processing the image to read the ticket, namely to read the identification code of the game ticket 4.

The validation module 24 is configured for receiving data from the reading module 16 resulting from reading of a game ticket 4 and for checking the status of the game ticket 4 as a function of the identification code.

The validation module 24 is configured for activating the game ticket 4 such as to allow the player to play the second game and for updating the status of the game ticket 4 to register that the game ticket 4 has now been activated.

The access module 34 is configured for enabling the player to interact with the computer system 12 for playing the second game as a function of the first game result of his game ticket 4.

The access module 34 is configured for outputting data to the player, for receiving input data from the player, for sending data to the management module 32 and for receiving data from the management module 32. The access module 34 is namely configured for the player to input access data 30 and to send the access data 30 to the management module 32.

The management module 32 is configured for checking the status of the game ticket 4, namely to check that the game ticket 4 is activated, and for retrieving ticket data. To this end, the management module 32 is configured for receiving the access data 30 from the access module 34, for requesting the validation module 24 to confirm activation of the game ticket 4 and for receiving activation data and ticket data from the validation module 24.

The validation module 24 is configured for receiving the access data 30 from the management module 32, for checking the activation of the ticket in the ticket database 22, for retrieving the ticket data from the ticket database 22 and for sending the activation data and the ticket data to the management module 32.

The management module 32 is configured for sending the activation data and the ticket data retrieved from the validation module 24 to the access module 34.

The access module 34 is configured for allowing the player to interact with the game module 26 for playing a second game.

Upon the player requesting access with the access data 30 of a game ticket 4, the management module 32 is configured for opening a ticket session.

Upon the player requesting to play a second game, the management module 32 is configured for opening a game session.

If the first game result comprises a number of credits for participating to a second game, the management module 32 is configured for opening a ticket session having a credit account with said number of credits and for decrementing a credit account of the ticket session each time the player starts a game session. Once the credit account is returned to zero, the management module 32 closes the ticket session. The management module 32 sends a corresponding data to the access module 34.

If the first game result comprises context data needed for implementing the second game rules, the access module 34 is configured for sending the context data to the game module 26 such that the game module 26 operates the second game as a function of the first game result.

The game module 26 is configured for operating the second game, for determining the prize awarded to the player and for communication the prize to the access module 34 and/or the management module 32.

Upon operating the second game, the game module 26 requests inputs from the player via the access module 34.

A game session may be interrupted, e.g. on the player's initiative or because of a technical problem.

The game module 26 is configured for storing the current state of each game session such as to be able to resume the ticket session and the game session. The management module 32 is configured for interrogating the game module 26 for the potential interrupted game sessions when the player accesses the access module 34 and to send the data to the access module 34. The access module 34 is configured for allowing the player to resume each interrupted game session.

A ticket session may be interrupted, e.g. on the player's initiative or because of a technical problem.

The access module 34 is configured for interrogating the management module 32 to determine whether the ticket session is already opened and if a game session is pending. If the ticket session is opened, the management module 32 is configured for interrogating the game module 26 for potential pending game session and for sending to the access module 34 the credit account and the pending game session. If at least one game session is pending, the access module 34 is configured for allowing the player to resume the pending game session.

Upon ending a game session, the game module 26 is configured for sending to the access module 34 the prize awarded to the player in connection with this game session, and the access module 34 is configured for displaying the price to the player.

Upon ending a game session, the game module 26 is configured for determining the prize awarded to the player, for communicating the prize to the management module 32. The management module 32 is configured to update the prize awarded to the game ticket 4 and to communicate the updated prize to the validation module 24. The validation module 24 is configured to update the prize associated to the game ticket 4 in the game ticket database 22.

If the first game result comprises a number of credits, the management module 32 is configured to update the prize of the game ticket 4 after each game session and to communicate the final updated prize to the validation module 24 once the ticket session is closed, i.e. once the last game session is ended.

The player may then use his ticket to redeem his prize at a point of sale. For redeeming the prize, the retailer's terminal connects to the validation module to check the status of the game ticket and to retrieve the prize of the ticket. A prize is redeemed if the ticket session or the game session is ended.

The game module 26 may be configured for implementing one or several different second games. A first game result may be credits for playing to a package of a plurality of second games.

In a preferred embodiment, the game module 26 comprises a game operating core or game motor configured for executing several second games provided as digital second game models, each second game model corresponding to one respective second game and each second game model coding the rules of the second game.

The game module 26 is configured for operating second games based on successive draws. The game module 26 is configured for successively operating the following steps in the course of a second game: trigger a first instant draw, display first data as a function of the result of the first instant draw, detect an input of the player and trigger a second instant draw and display second data, the second instant draw being operated as a function of the first draw and/or the input of the player and the second data being determined as a function of the first draw and/or the input of the player.

Each second game model comprises a finite state automaton or finite state machine comprising a plurality of states and a plurality of transitions between the states. Each transition triggered from a current state make the finite state machine stay in the current state or transit to another state.

The different states correspond to the different possible configurations that the second game can reach as a function of the results of the successive draws and/or as a function of the inputs of the player.

Each transition corresponds to a result of an instant draw and/or to an input of the player. An entry transition corresponds to the start of the game and an exit transition corresponds to the end of the game.

This configuration of the game module 26 allows the game module 26 to implement a plurality of heterogeneous games based on successive instant draw based on the same game module 26 and in particular on the same game motor.

The game module 26 may be configured for digitally implementing a draw game similar to the draw game implemented with the game ticket of Figures 1 and 2 and the computer system 12 of Figure 3.

The reading module 16, the validation module 24, the management module 32, the access module 34 and the game module 26 are hosted in a same electronic device or in different electronic device, namely computer or computer servers.

In particular, the access module 34 may be a computer program or application hosted in a retailer's electronic device such as free access retailer's terminal or a player's electronic device, such as a personal computer or a smartphone.

The access module 34 may also be a website to be accessed by the player via a retailer's electronic device such as free access retailer's terminal or a player's electronic device, such as a personal computer or a smartphone.

The reading module 16 may also be hosted in a retailer's electronic device such as free access retailer's terminal or a player's electronic device, such as a personal computer or a smartphone.

The reading module 16 is preferably operated in a retailer's electronic device, such that the game ticket is read and activated at the point of sale, by the retailer.

The validation module 24, the management module 32 and the game module 26 are preferably hosted in one or several computer servers in communication with the reading module 16 and the access module 34.

The physical game tickets of Figures 1 and 2 and Figure 4 and 5 are printed with first game result data covered by a scratch-off film, whereby the first game result is revealed to the player by removing the scratch-off film.

In an alternative embodiment, physical game tickets comprise a computer memory in which the first game result is stored. The first game result is thus revealed to the player upon reading the memory, e.g. using a player electronic device or a retailer's electronic device.

In another alternative embodiment, the physical game ticket bears no first game result data. Instead, the first game result allocated to the game ticket is retrieved from the game ticket database 22 as a function of the identification data of the game ticket, from a retailer's electronic device. The first game result is thus revealed to the player upon validating the ticket at the retailer's electronic device, e.g. with displaying the first game result or printing the first game result on a receipt, and/or upon accessing to access module 34 with a retailer's electronic device or a player's electronic device.

Owing to the invention, a game system implements a game in which the player purchases a game ticket which is assigned a first game results and which enables the player to access a second game which is implemented as a function of the first game result.

The first game result is systematically a winning first game result which affects final prize expectancy at the second game without bringing the final prize expectancy down to zero.

The game ticket systematically allows the player to play the second game, but the first game result affects the implementation of the second game or the prize awarded at the end of the second game.

The first game result may comprise a non-zero maximum winning for the second game, a number of credits for the second game and/or a bonus for the second game, which affect final prize expectancy for the second game in different manners.

It may happen that the result of the second game is a losing result. However, this result exclusively from the implementation of the second game result and is does not result directly from the first game result.

The second game preferably requires the player to make input or actions impacting the result of the second game.

The game system allows improving the game experience of the player. Indeed, the game experience is less repetitive because the play to the second game is affected by the first game result. The second game requesting inputs affecting the second game result from the players also renders the experience less repetitive.

Besides, the game experience is longer or more rewarding for the player, namely when digitally performing a second game with successive draws and inputs from the player between each draw.

In the game system of Figures 1 - 3, a first game result is assigned to each game ticket.

It is also possible to provide an alternative game system in which no first game result is allocated individually to each game ticket but first game result is allocated to each draw, the first game result being identical for all the game tickets registered for this draw.

The winning data vary from one draw to the other. For each draw, the first game result determines the winning of each game ticket in an identical manner. Two game tickets registered for the same designated draw with the same selection will have the same prize expectancy. However, a given game ticket with a given selection will have different prizes at two different draws due to the different first game winning result. Therefore, the prize finally awarded to the player depends also on the choice of the draw by the player.

The first game result associated to the draw is determined without being revealed to the players. The first game result is determined e.g. by a preliminary draw among a list of possible gain data for the draws. The list of first game results may be known to the players as part of the game rules. However, the players are not aware of which first game result is allocated to a specific draw before registering a game ticket for a designated draw. The first game result is revealed to the players once registration for the draw is closed. The winning data of the draw is revealed e.g. with being broadcasted to the personal devices, the common devices and/or the retailers terminals.

Such game is preferably a community game in which several players are to play to each draw. The draw is performed only and when several game tickets are registered for the designated draw.

In one embodiment, draws are schedules at fixed times irrespective of the numbers of game tickets having registered. The time interval between draws may be from a few minutes to a few hours.

A community draw game may be implemented among communities of players of various sizes. A community draw game may be implemented at a national scale, a regional scale, a city scale or even a point of sale scale.

In the preceding specification, the invention has been described with reference to specific exemplary embodiments and examples thereof. It will, however, be evident that various modifications and changes may be made thereto without departing from the broader spirit and scope of invention as set forth in the claims that follow. The specification and drawings are accordingly to be regarded in an illustrative manner rather than a restrictive sense.

## Claims

1. Game system comprising a game ticket to be purchased by a player, the game ticket being assigned a winning first game result of a first game, the game ticket enabling the player to play to at least one second game as a function of the first game result, the first game result affecting the final prize expectancy to the second game.

2. Game system according to claim 1, wherein the first game result comprises a prize data for the second game, a bonus data for the second game and/or a credit data for the second game.

3. Game system according to claim 1 or 2, wherein the first game result varies from one game ticket to another ticket in a game ticket pool of the game system.

4. Game system according to any of claims 1 - 3, the first game result is printed on the game ticket and covered by a mask to be scratched-off by the player after purchase of the game support.

5. Game system according to any of claims 1 - 4, wherein the game ticket is printed with second game fields to be selected by the player.

6. Game system according to any of claims 1 - 5, wherein a second game is based on several successive instant draws, each following draw being operated as a function of the preceding draw and as a function of an input of the player after the preceding draw, the result of the following draw being a function of the preceding draw and/or of the input of the player.

7. Game system according to any of claims 1 - 6, comprising a computer system configured for implementing the second game.

8. Game system according to claim 7, wherein the computer system is configured for activating the game ticket upon receipt of an activation request, the computer system being configured for allowing the player to play the second game only after activation of the game ticket.

9. Game system according to claim 7 or 8, wherein the computer system comprises a ticket database storing ticket data for each game ticket, the ticket data comprising a game ticket identification code, a first game result assigned to the game ticket and a status of the game ticket.

10. Game system according to any of claims 7 - 9, wherein the computer system comprises a management module configured for checking a status of the game ticket, for allowing the player to play the second game as a function of the status of the game ticket and for updating the status of the game ticket.

11. Game system according to claim 10, wherein the management module is configured for opening a game session associated to a game ticket, for enabling the player to play once a second game and for closing the ticket session once the credit account is empty.

12. Game system according to claim 10 or 11, wherein the management module is configured for opening a ticket session associated to a game ticket, for crediting a ticket session credit account with credits of the first game result, for decrementing the credit account each time the player plays the second game and for closing the ticket session once the credit account is empty.

13. Game system according to any of claims 10 - 12, wherein the computer system comprises a game module configured for digitally executing the second game as a function of the first game result and an access module configured for the player to interact with the game module, the management module being configured for sending the status of the game ticket to the access module and the access module being configured for allowing the player to play the second game as a function of the ticket status.

14. Game system according to claim 13, wherein the first game result comprises a number of credits for playing the second game, the management module being configured for sending the credit account to the access module, the access module being configured for allowing the player to play the second game as a function of the credit account.

15. Game system according to claim 13 or 14, wherein the first game result comprises a context data needed for executing the second game, the management module being configured for sending the context data to the access module, the access module being configured for sending the context data to game module, the game module being configured for executing the second game as a function of the context data.

16. Game ticket to be purchased by a player, the game ticket being allocated a winning first game result of a first instant game, the game ticket allowing the player to participate to at least one second game to be implemented using the first game result, the first game result affecting the final prize expectancy of the second game.

17. A method of implementing a game, comprising the steps of :
- providing a game ticket which is assigned a winning first game result of a first game, the game ticket allowing the player to subsequently participate to at least one second game;
- implementing the second game as a function of the first game result, the first game result affecting the final prize expectancy of the second game.

18. The method of claim 17, comprising revealing the final prize individually for each game ticket to one player at a time or as a community game simultaneously for several players at the same time.
